# FASCICULE DE BREVET EUROPEEN

(11) **EP 3 056 383 B1**
(45) Date de publication et mention de la délivrance du brevet: **15.05.2019**
(21) Numéro de dépôt: 16154524.9
(22) Date de dépôt: 05.02.2016
(51) Int. Cl.: B60Q 1/00, B25B 27/00, B25B 9/02

(54) **DISPOSITIF DE SIGNALISATION ET/OU D'ÉCLAIRAGE POUR VÉHICULE AUTOMOBILE AYANT UN ÉLÉMENT AMOVIBLE DE MANOEUVRE D'UN SUPPORT D'AMPOULE LUMINEUSE ET PROCÉDÉ DE FABRICATION**
SIGNALISIERUNGS- UND/ODER BELEUCHTUNGSVORRICHTUNG FÜR KRAFTFAHRZEUG, DIE EIN ENTFERNBARES ELEMENT ZUM BEDIENEN EINER LEUCHTENHALTERUNG UMFASST, UND ENTSPRECHENDES HERSTELLUNGSVERFAHREN
SIGNALLING AND/OR LIGHTING DEVICE FOR A MOTOR VEHICLE HAVING A REMOVABLE ELEMENT FOR OPERATING A LIGHT-BULB HOLDER, AND MANUFACTURING METHOD

(30) Priorité: 10.02.2015 FR 1551048
(43) Date de publication de la demande: 17.08.2016
(73) Titulaire: VALEO ILUMINACION, 23600 Martos (ES)
(72) Inventeur: PUENTE, Jean-Claude, 93190 LIVRY GARGAN (FR); GARCÍA CASTILLA, José, 23600 MARTOS (ES); COLMENERO, Pedro, 23640 TORREDELCAMPO (ES); GARCÍA, Isidro, 23600 JAÉN (ES)

(56) Documents cités:
- FR-A1- 2 655 457
- FR-A1- 2 721 563
- FR-A1- 2 882 425
- FR-A1- 2 984 461
- JP-A- 2010 238 578

## Description

### Domaine technique de l'invention

L'invention concerne un dispositif de signalisation et/ou d'éclairage pour véhicule automobile, comprenant un boitier muni d'une ouverture d'accès vers l'intérieur du boitier, un capot de fermeture obturant l'ouverture d'accès et un support de réception d'une ampoule lumineuse disposé dans le boitier.

L'invention a pour objet également un procédé de fabrication d'un tel dispositif de signalisation et/ou d'éclairage pour véhicule automobile.

### État de la technique

Classiquement, un tel dispositif d'éclairage et/ou de signalisation pour véhicule automobile comporte un boitier fermé vers une face avant par une glace de protection destinée à laisser passer la lumière générée par l'ampoule lumineuse qu'il renferme. En face arrière, le boitier est muni d'une ouverture d'accès obturée par l'intermédiaire d'un capot de fermeture dont le retrait permet de donner accès vers l'intérieur du boiter et à l'ampoule.

L'ampoule peut être destinée à une fonction de feu de route, de feu de croisement, de feu de position, de lampe de ville, d'indicateur de changement de direction ou clignotant.

Actuellement, il est connu de fixer l'ampoule concernée sur le boitier par l'intermédiaire d'un porte lampe ou support de réception de l'ampoule. Ce support est fixé sur le boitier de manière démontable, par exemple via un système à baïonnette nécessitant un déplacement d'environ un quart de tour du support par rapport au boitier. L'ampoule est également montée de manière amovible sur le support. L'organisation générale de l'ensemble est généralement telle que l'ampoule fait face à la glace de protection.

Cette solution présente un inconvénient principal lorsque l'utilisateur désire changer l'ampoule, par exemple par nécessité en cas de défaillance de l'ampoule. Il est nécessaire à l'utilisateur de démonter le support portant encore la lampe, de retirer cet ensemble afin de remplacer l'ampoule sur le support, puis de remonter sur le boitier l'ensemble constitué par le support et la nouvelle ampoule. Cette opération nécessite de le part de l'utilisateur une série de mouvements de rotation et de translation. Cela peut s'avérer difficile et pénible en cas de manque d'accessibilité au support par la main de l'utilisateur. Ce problème s'accroit avec la nouvelle tendance, pour des raisons de style, de placer les ampoules à proximité de la glace de protection, à l'opposé de la zone par laquelle les ampoules sont insérées dans le boitier ; jusque-là, il était usuel de placer les ampoules plutôt à l'arrière du projecteur et elles étaient donc de fait plus accessibles.

Le document FR 2 882 425 A1 divulgue un autre type de solution.

En raison de ces difficultés, l'utilisateur a de plus en plus tendance à requérir les services d'un professionnel pour remplacer l'ampoule, avec les inconvénients que cela entrainent en coûts de service, immobilisation du véhicule, etc...

### Objet de l'invention

Le but de la présente invention est de remédier aux inconvénients des techniques exposées précédemment.

Un objectif supplémentaire est de trouver une solution simple, économique, conviviale, fiable, et présentant une bonne flexibilité entre différents types d'ampoules et différents types de véhicules automobiles. Pour cela, l'invention propose un dispositif de signalisation et/ou d'éclairage pour véhicule automobile, comprenant un boitier muni d'une ouverture d'accès vers l'intérieur du boitier, un capot de fermeture obturant l'ouverture d'accès, un support de réception d'une ampoule lumineuse disposé dans le boitier, et un élément amovible de manoeuvre permettant d'actionner manuellement le support pour le monter et le démonter par rapport au boitier, le dispositif comprenant des éléments de maintien de l'élément amovible de manoeuvre permettant de fixer l'élément amovible de manoeuvre de manière réversible sur le boitier ou sur le capot de fermeture.

Il peut être fait en sorte que l'élément amovible de manoeuvre soit disposé à l'intérieur du boitier lorsqu'il est fixé par l'intermédiaire des éléments de maintien.

Selon l'invention, l'élément amovible de manoeuvre comprend des premiers éléments d'accouplement et le support comprend des deuxièmes éléments d'accouplement complémentaires des premiers éléments d'accouplement, les premiers et deuxième éléments d'accouplement étant aptes à coopérer entre eux de manière réversible de sorte que le dispositif de signalisation et/ou d'éclairage varie sélectivement entre une première configuration dans laquelle l'élément amovible de manoeuvre est fixé par l'intermédiaire des éléments de maintien et dans laquelle les premiers et deuxièmes éléments d'accouplement ne coopèrent pas entre eux, et une deuxième configuration dans laquelle l'élément amovible de manoeuvre n'est pas fixé sur le boîtier ou sur le capot et est séparé des éléments de maintien et dans laquelle les premiers et deuxièmes éléments d'accouplement coopèrent entre eux afin de permettre l'actionnement du support par l'élément amovible de manoeuvre pour son montage et son démontage par rapport au boitier.

L'élément amovible de manoeuvre peut comprendre une zone de préhension destinée à être accessible depuis l'extérieur du boitier lorsque la deuxième configuration est adoptée.

Les premiers et deuxièmes éléments d'accouplement sont de préférence configurés de sorte à autoriser la transmission d'un couple mécanique de l'élément amovible de manoeuvre vers le support afin que l'actionnement en rotation de l'élément amovible de manoeuvre par l'utilisateur entraine en rotation le support par rapport au boitier afin de provoquer son montage et son démontage.

Les éléments de maintien comprennent de préférence des éléments d'encliquetage portés par le boitier et/ou par le capot de fermeture, le maintien de l'élément amovible de manoeuvre étant obtenu par un clipsage de l'élément amovible de manoeuvre dans les éléments d'encliquetage.

Les éléments de maintien peuvent comprendre un élément de liaison souple permettant de relier en permanence l'élément amovible de manoeuvre au dispositif, notamment au capot de fermeture, afin de rendre l'élément amovible de manoeuvre imperdable et inséparable du boitier ou du capot de fermeture.

L'élément amovible de manoeuvre peut comprendre au moins des première et deuxième têtes distinctes, la première tête étant configurée de sorte à permettre d'actionner manuellement un premier type de support adapté à un premier type d'ampoule, notamment une lampe de ville, pour le monter et le démonter par rapport au boitier, et la deuxième tête étant configurée de sorte à permettre d'actionner manuellement un deuxième type de support, différent du premier type de support, adapté à un deuxième type d'ampoule, notamment une ampoule d'indicateur de changement de direction, pour le monter et le démonter par rapport au boitier.

Un procédé de fabrication d'un tel dispositif de signalisation et/ou d'éclairage pour véhicule automobile comprend une étape de fabrication, notamment par moulage, d'une pièce d'un seul tenant comprenant le capot de fermeture et l'élément amovible de manoeuvre reliés entre eux par une zone prédéterminée de rupture afin de rendre sécable ladite zone et permettre la séparation de l'élément amovible de manoeuvre par rapport au capot de fermeture lorsqu'un effort prédéterminé est appliqué par l'utilisateur sur l'élément amovible de manoeuvre.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- la figure 1 est une vue en coupe transversale d'un premier exemple de dispositif selon l'invention,
- la figure 2 est une vue en perspective avant d'une partie du dispositif de la figure 1,
- la figure 3 est une vue schématique en coupe transversale d'un deuxième exemple de dispositif selon l'invention,
- la figure 4 est une vue schématique en coupe transversale d'un troisième exemple de dispositif selon l'invention,
- la figure 5 est une vue du capot de fermeture en cas de maintien de l'élément amovible de manoeuvre,
- et la figure 6 est une vue en perspective représentant le capot de fermeture et l'élément amovible de manoeuvre lorsqu'il n'est pas maintenu.

### Description de modes préférentiels de l'invention

L'invention va être décrite dans le cas particulier d'un dispositif de signalisation et/ou d'éclairage 10 pour véhicule automobile situé à l'avant du véhicule et constituant ce qu'il est classiquement appelé un projecteur. Ces caractéristiques ne sont pas limitatives quant à l'étendue du champ d'application possible de l'invention exposée ci-dessous.

Le dispositif 10 comprend un boitier 13 muni d'une ouverture 14 d'accès vers l'intérieur du boitier 13. Le dispositif de signalisation et/ou d'éclairage 10 s'entend d'un dispositif optique ayant pour fonction d'émettre une lumière à travers une paroi transparente ou translucide du boitier 13, à des fins de signalisation et/ou d'éclairage dans le cadre d'une utilisation pour un véhicule automobile.

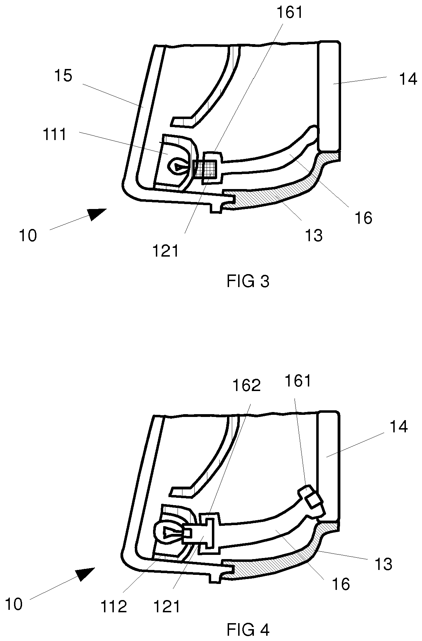

Le boitier 13 renferme et protège une ampoule lumineuse qui apparait sous les références 111, 112 sur les figures. Dans le domaine technique concerné ici, une telle ampoule lumineuse est aussi connue sous le nom de « lampe ». En fonction de la nature du dispositif 10 et de sa fonction au sein du véhicule, l'ampoule lumineuse peut correspondre à une lampe 111 ayant pour fonction de constituer une lampe de ville par exemple (cas de l'exemple de la figure 3), ou à une lampe 112 ayant pour fonction de former une lampe d'indicateur de changement de direction ou clignotant par exemple (cas de l'exemple de la figure 4). Il pourrait aussi s'agir d'une ampoule utilisée dans le cadre d'un feu de route ou d'un feu de croisement par exemple.

Le dispositif 10 comprend un support de réception d'une ampoule lumineuse, identifié par les références 121, 122 sur les figures. Le support est disposé dans le boitier 13. Dans le domaine technique concerné ici, un tel support 121, 122 est aussi connu sous le nom de « porte lampe ». Sa structure est globalement adaptée à la nature de l'ampoule qu'il est destiné à porter et à alimenter électriquement. L'ampoule est montée de manière réversible sur le support correspondant, de la même manière que le support est lui-même monté de manière démontable par rapport au boitier 13 pour permettre de déplacer, par rapport au boitier 13, l'ensemble constitué par le support et par l'ampoule au moment du changement d'ampoule. A titre d'exemple présentant l'avantage de sa simplicité, le support 121, 122 est fixé sur le boitier 13 de manière démontable par un système à baïonnette nécessitant un déplacement d'environ un quart de tour du support 121, 122 par rapport au boitier 13.

En particulier, il est représenté sur la figure 3 un premier type de support repéré 121 adapté à un premier type d'ampoule, c'est-à-dire l'ampoule repérée 111 et qui est notamment une lampe de ville. Le premier type de support 121 est apte à être monté et démonté par rapport au boitier 13. En complément, la figure 4 montre un deuxième type de support repéré 122, différent du premier type de support 121, adapté à un deuxième type d'ampoule, c'est-à-dire l'ampoule repérée 112 et qui est notamment une ampoule d'indicateur de changement de direction. Le deuxième type de support 122 est apte également à être monté et démonté par rapport au boitier 13.

Le boitier 13 est fermé vers l'avant par une glace de protection 15 destinée à laisser passer la lumière générée par l'ampoule lumineuse 111, 112 qu'il renferme. En face arrière, le boitier 13 est obturé, au niveau de l'ouverture 14, par l'intermédiaire d'un capot de fermeture 17. Celui-ci peut être fixé de manière amovible par tout moyen adapté. Son retrait permet de donner accès vers l'intérieur du boiter 13 et en particulier à l'ampoule 111, 112, ou pour le moins au support 121, 122.

Le dispositif 10 comprend aussi un élément amovible de manoeuvre 16 permettant d'actionner manuellement à distance le support 121, 122 pour le monter et le démonter par rapport au boitier 13. Autrement dit, l'élément amovible de manoeuvre 16 qui adopte par exemple la forme générale d'une tige, est un outil permettant d'être saisi manuellement par l'utilisateur à une première extrémité de l'outil et à coopérer au niveau d'une deuxième extrémité de l'outil avec le support 121, 122 à monter et à démonter. Les mouvements appliqués à l'élément 16 par l'utilisateur au niveau de la première extrémité de l'élément 16 provoquent un actionnement du support 121, 122 par la deuxième extrémité de l'élément 16, pour réaliser le montage et le démontage du support 121, 122 par l'intermédiaire de l'élément 16. L'élément de manoeuvre 16 peut être considéré comme un prolongateur ou une rallonge permettant une manipulation manuelle et à distance du support 121, 122 par l'utilisateur, à défaut pour ce dernier d'avoir la possibilité de le saisir manuellement, notamment en cas de difficulté ou d'impossibilité d'accès à travers l'ouverture 14.

Le dispositif 10 comprend des éléments de maintien 20 de l'élément amovible de manoeuvre 16 configurés de sorte à permettre de fixer l'élément amovible de manoeuvre 16 de manière réversible et donc de manière amovible sur le boitier 13 ou sur le capot de fermeture 17.

Selon le mode de réalisation tel qu'illustré mais en aucun cas limitatif, l'élément amovible de manoeuvre 16 est disposé à l'intérieur du boitier 13 lorsqu'il est fixé par l'intermédiaire des éléments de maintien 20. Cela permet de protéger l'élément 16 et d'éviter autant que possible sa perte lorsqu'il n'est pas utilisé. Il reste toutefois possible de prévoir que l'élément amovible de manoeuvre 16 soit disposé à l'extérieur du boitier 13 lorsqu'il est fixé par l'intermédiaire des éléments de maintien 20. Les éléments de maintien seront alors adaptés en conséquence.

L'élément amovible de manoeuvre 16 comprend des premiers éléments d'accouplement 22 et le support 121, 122 comprend des deuxièmes éléments d'accouplement 23 complémentaires des premiers éléments d'accouplement 22. Les premiers et deuxième éléments d'accouplement 22, 23 sont aptes à coopérer entre eux de manière réversible de sorte que le dispositif de signalisation et/ou d'éclairage 10 varie sélectivement entre :
- une première configuration dans laquelle l'élément amovible de manoeuvre 16 est fixé par l'intermédiaire des éléments de maintien 20 et dans laquelle les premiers et deuxièmes éléments d'accouplement 22, 23 ne coopèrent pas entre eux,
- et une deuxième configuration dans laquelle l'élément amovible de manoeuvre 16 n'est pas fixé et est séparé des éléments de maintien 20 et dans laquelle les premiers et deuxièmes éléments d'accouplement 22, 23 coopèrent entre eux afin de permettre l'actionnement du support 121, 122 par l'élément amovible de manoeuvre 16 pour son montage et son démontage par rapport au boitier 13.

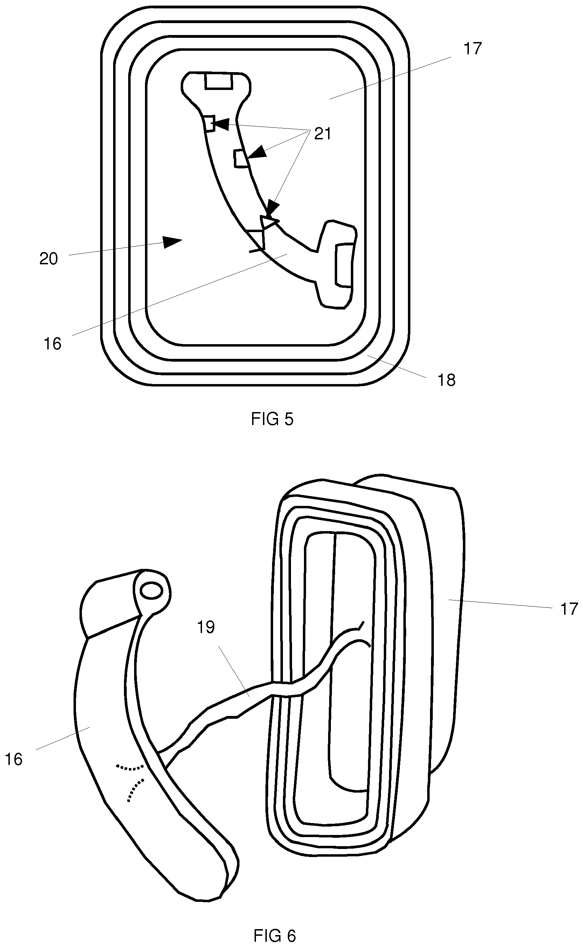

La première configuration est adoptée sur la figure 5 tandis que la deuxième configuration est occupée dans la situation des figures 3 et 4.

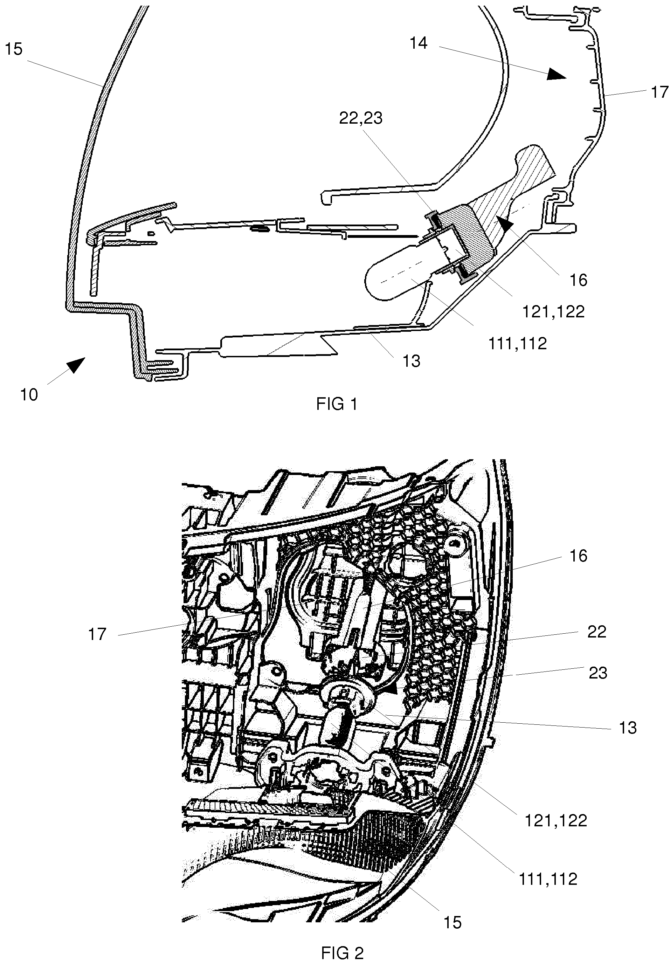

La nature des premiers et deuxièmes éléments d'accouplement 22, 23 n'est pas limitative en soi. Ils peuvent par exemple être de type mâle et femelle comme cela est visible sur la figure 1, adaptés pour une transmission d'un couple mécanique lorsqu'ils coopèrent entre eux, de l'élément 16 vers le support 121, 122.

La deuxième configuration correspond à un état du dispositif 10 dans lequel les mouvements relatifs entre l'élément amovible de manoeuvre 16 et le support d'ampoule sont possibles.

L'élément amovible de manoeuvre 16 comprend une zone de préhension destinée à être accessible depuis l'extérieur du boitier 13 lorsque la deuxième configuration est adoptée. Une telle organisation facilite la manipulation de l'élément amovible de manoeuvre 16 par l'utilisateur lors du montage et du démontage du support 121, 122 sur le boitier 13.

Selon un mode de réalisation particulier, les premiers et deuxièmes éléments d'accouplement 22, 23 sont configurés de sorte à autoriser la transmission d'un couple mécanique de l'élément amovible de manoeuvre 16 vers le support 121, 122 afin que l'actionnement en rotation de l'élément amovible de manoeuvre 16 par l'utilisateur entraine en rotation le support 121, 122 par rapport au boitier 13 afin de provoquer son montage et son démontage.

En référence à la figure 5 maintenant, les éléments de maintien 20 comprennent des éléments d'encliquetage 21 portés par le boitier 13 et/ou par le capot de fermeture 17. Le maintien de l'élément amovible de manoeuvre 16 est obtenu par un clipsage de l'élément amovible de manoeuvre 16 dans les éléments d'encliquetage 21. L'exemple de la figure 5 montre une organisation particulière dans laquelle les éléments d'encliquetage 21 sont agencés sur une face interne du capot de fermeture 17, permettant de placer l'élément de manoeuvre 16 à l'intérieur du boitier 13 lorsque d'une part l'élément de manoeuvre 16 est fixé sur le capot 17 via les éléments d'encliquetage 21 et d'autre part le capot 17 est fixé de manière à obturer l'ouverture 14. Un autre avantage de cette organisation est de faire apparaitre l'élément de manoeuvre 16 aux yeux de l'utilisateur lorsqu'il retire le capot de fermeture 17, ce qui va l'inciter à l'utiliser. La nature des moyens de fixation réversible du capot 17 sur le boitier 13 peut-être quelconque. Un joint repéré 18, agencé à la périphérie du capot 17 et solidaire de celui-ci, peut être interposé entre le capot 17 et le boitier 13 autour de l'ouverture 14 afin d'assurer une étanchéité à l'eau et à l'air.

Les éléments d'encliquetage 21 peuvent alternativement être formés sur une face externe du capot de fermeture 17 afin de maintenir l'élément de manoeuvre 16 à l'extérieur du boitier 13 ou sur une face intérieure ou extérieure du boitier 13.

Les éléments de maintien 20 comprennent de préférence un élément de liaison souple 19 permettant de relier en permanence l'élément amovible de manoeuvre 16 au dispositif 10, notamment au capot de fermeture 17, afin de rendre l'élément amovible de manoeuvre 16 imperdable et inséparable du boitier 13 ou du capot de fermeture 17. Notamment, l'objectif est de relier l'élément de manoeuvre 16 soit au boitier 13, soit au capot de fermeture 17, lorsque la deuxième configuration définie ci-dessus est adoptée. La figure 6 représente le cas particulier où l'élément de liaison souple 19, qui est par exemple un cordon, un fil, un câble ou équivalent, relie à demeure l'élément amovible de manoeuvre 16 au capot de fermeture 17, même lorsque l'élément amovible de manoeuvre 16 n'est pas fixé par les éléments de maintien 20.

Dans l'exemple illustré sur la figure 4, qui est très avantageux en terme de flexibilité et de modularité d'utilisation entre différents types de véhicules automobiles et différents types d'ampoules, l'élément amovible de manoeuvre 16 présente une organisation bicéphale ou tricéphale : il comprend au moins des première et deuxième têtes 161, 162 distinctes l'une de l'autre, notamment organisées à des extrémités opposées de l'élément de manoeuvre 16. La première tête 161 est configurée de sorte à permettre d'actionner manuellement le premier type de support 121 adapté au premier type d'ampoule 111, pour le monter et le démonter par rapport au boitier 13. La deuxième tête 162 quant à elle est configurée de sorte à permettre d'actionner manuellement le deuxième type de support 122 adapté au deuxième type d'ampoule 112, pour le monter et le démonter par rapport au boitier 13. Une alternative non représentée prévoit une organisation de l'élément amovible de manoeuvre 16 à trois têtes distinctes et respectivement adaptées à la coopération avec trois types de support d'ampoules distincts entre eux.

Chaque tête 161, 162 peut intégrer les deuxièmes éléments d'accouplement 23 évoqués précédemment, adaptés pour coopérer avec les premiers éléments d'accouplement 22 associés portés par le support 121, 122 correspondant.

Il convient de noter toutefois, à l'image de la figure 1 et de la figure 3, que l'élément amovible de manoeuvre 16 peut n'être équipé que d'une seule tête adaptée à un seul type de support d'ampoule.

Lors de la fabrication d'un tel dispositif de signalisation et/ou d'éclairage pour véhicule automobile 10, il peut être avantageux de mettre en oeuvre une étape de fabrication, notamment par moulage, d'une pièce d'un seul tenant comprenant le capot de fermeture 17 et l'élément amovible de manoeuvre 16 reliés entre eux par une zone prédéterminée de rupture. Cette organisation permet de rendre sécable cette zone prédéterminée de rupture et permettre la séparation de l'élément amovible de manoeuvre 16 par rapport au capot de fermeture 17 lorsqu'un effort prédéterminé est appliqué par l'utilisateur sur l'élément amovible de manoeuvre 16. Mais préalablement à l'application de cet effort, l'élément de manoeuvre est alors rigidement solidaire du capot 17, ce qui permet d'éviter tout risque de perte de l'élément 16 tant qu'un changement d'ampoule n'a pas été nécessaire.

Il va de soi que les figures sont données exclusivement à titre illustratif et que d'autres formes et d'autres dimensions peuvent être attribuées à chacune des pièces entrant dans la constitution du dispositif d'éclairage et/ou de signalisation précédemment décrit.

## Revendications

1. Dispositif de signalisation et/ou d'éclairage (10) pour véhicule automobile, comprenant un boitier (13) muni d'une ouverture (14) d'accès vers l'intérieur du boitier (13), un capot de fermeture (17) obturant l'ouverture (14) d'accès, un support (121, 122) de réception d'une ampoule lumineuse (111, 112) disposé dans le boitier (13), et un élément amovible de manoeuvre (16) permettant d'actionner manuellement le support (121, 122) pour le monter et le démonter par rapport au boitier (13), le dispositif (10) comprenant des éléments de maintien (20) de l'élément amovible de manoeuvre (16) permettant de fixer l'élément amovible de manoeuvre (16) de manière réversible sur le boitier (13) ou sur le capot de fermeture (17) **caractérisé en ce que** l'élément amovible de manoeuvre (16) comprend des premiers éléments d'accouplement (22) et le support (121, 122) comprend des deuxièmes éléments d'accouplement (23) complémentaires des premiers éléments d'accouplement (23), les premiers et deuxième éléments d'accouplement (22, 23) étant aptes à coopérer entre eux de manière réversible de sorte que le dispositif de signalisation et/ou d'éclairage (10) varie sélectivement entre une première configuration dans laquelle l'élément amovible de manoeuvre (16) est fixé par l'intermédiaire des éléments de maintien (20) et dans laquelle les premiers et deuxièmes éléments d'accouplement (22, 23) ne coopèrent pas entre eux, et une deuxième configuration dans laquelle l'élément amovible de manoeuvre (16) n'est pas fixé sur le boîtier ou sur le capot et est séparé des éléments de maintien (20) et dans laquelle les premiers et deuxièmes éléments d'accouplement (22, 23) coopèrent entre eux afin de permettre l'actionnement du support (121, 122) par l'élément amovible de manoeuvre (16) pour son montage et son démontage par rapport au boitier (13)..

2. Dispositif de signalisation et/ou d'éclairage (10) selon la revendication 1, **caractérisé en ce que** l'élément amovible de manoeuvre (16) est disposé à l'intérieur du boitier (13) lorsqu'il est fixé par l'intermédiaire des éléments de maintien (20).

3. Dispositif de signalisation et/ou d'éclairage (10) selon l'une quelconque des revendications 1 ou 2, **caractérisé en ce que** l'élément amovible de manoeuvre (16) comprend une zone de préhension destinée à être accessible depuis l'extérieur du boitier (13) lorsque la deuxième configuration est adoptée.

4. Dispositif de signalisation et/ou d'éclairage (10) selon l'une des revendications précédentes, **caractérisé en ce que** les premiers et deuxièmes éléments d'accouplement (22, 23) sont configurés de sorte à autoriser la transmission d'un couple mécanique de l'élément amovible de manoeuvre (16) vers le support (121, 122) afin que l'actionnement en rotation de l'élément amovible de manoeuvre (16) par l'utilisateur entraine en rotation le support (121, 122) par rapport au boitier (13) afin de provoquer son montage et son démontage.

5. Dispositif de signalisation et/ou d'éclairage (10) selon l'une quelconque des revendications 1 à 4, **caractérisé en ce que** les éléments de maintien (20) comprennent des éléments d'encliquetage (21) portés par le boitier (13) et/ou par le capot de fermeture (17), le maintien de l'élément amovible de manoeuvre (16) étant obtenu par un clipsage de l'élément amovible de manoeuvre (16) dans les éléments d'encliquetage (21).

6. Dispositif de signalisation et/ou d'éclairage (10) selon l'une quelconque des revendications 1 à 5, **caractérisé en ce que** les éléments de maintien (20) comprennent un élément de liaison souple (19) permettant de relier en permanence l'élément amovible de manoeuvre (16) au dispositif (10), notamment au capot de fermeture (17), afin de rendre l'élément amovible de manoeuvre (16) imperdable et inséparable du boitier (13) ou du capot de fermeture (17).

7. Dispositif de signalisation et/ou d'éclairage (10) selon l'une quelconque des revendications 1 à 6, **caractérisé en ce que** l'élément amovible de manoeuvre (16) comprend au moins des première et deuxième têtes (161, 162) distinctes, la première tête (161) étant configurée de sorte à permettre d'actionner manuellement un premier type de support (121) adapté à un premier type d'ampoule (111), notamment une lampe de ville, pour le monter et le démonter par rapport au boitier (13), et la deuxième tête (162) étant configurée de sorte à permettre d'actionner manuellement un deuxième type de support (122), différent du premier type de support (121), adapté à un deuxième type d'ampoule (112), notamment une ampoule d'indicateur de changement de direction, pour le monter et le démonter par rapport au boitier (13).

8. Procédé de fabrication d'un dispositif de signalisation et/ou d'éclairage (10) pour véhicule automobile selon l'une quelconque des revendications précédentes, comprenant une étape de fabrication, notamment par moulage, d'une pièce d'un seul tenant comprenant le capot de fermeture (17) et l'élément amovible de manoeuvre (16) reliés entre eux par une zone prédéterminée de rupture afin de rendre sécable ladite zone et permettre la séparation de l'élément amovible de manoeuvre (16) par rapport au capot de fermeture (17) lorsqu'un effort prédéterminé est appliqué par l'utilisateur sur l'élément amovible de manoeuvre (16).

## Patentansprüche

1. Signalisierungs- und/oder Beleuchtungsvorrichtung (10) für ein Kraftfahrzeug, die ein Gehäuse (13), das mit einer Zugangsöffnung (14) zum Inneren des Gehäuses (13) versehen ist, eine Verschlusskappe (17), die die Zugangsöffnung (14) verschließt, einen Träger (121, 122) zur Aufnahme einer Leuchtbirne (111, 112), der im Gehäuse (13) angeordnet ist, und ein entfernbares Betätigungselement (16) enthält, das es ermöglicht, den Träger (121, 122) manuell zu aktivieren, um ihn bezüglich des Gehäuses (13) ein- und auszubauen, wobei die Vorrichtung (10) Halteelemente (20) des entfernbaren Betätigungselements (16) enthalten, die es erlauben, das entfernbare Betätigungselement (16) umkehrbar am Gehäuse (13) oder an der Verschlusskappe (17) zu befestigen, **dadurch gekennzeichnet, dass** das entfernbare Betätigungselement (16) erste Kopplungselemente (22) enthält, und der Träger (121, 122) zweite Kopplungselemente (23) komplementär zu den ersten Kopplungselementen (23) enthält, wobei die ersten und zweiten Kopplungselemente (22, 23) in der Lage sind, umkehrbar so zusammenzuwirken, dass die Signalisierungs- und/oder Beleuchtungsvorrichtung (10) selektiv zwischen einer ersten Konfiguration, in der das entfernbare Betätigungselement (16) mittels der Halteelemente (20) befestigt ist und in der die ersten und zweiten Kopplungselemente (22, 23) nicht zusammenwirken, und einer zweiten Konfiguration variiert, in der das entfernbare Betätigungselement (16) nicht am Gehäuse oder an der Kappe befestigt und von den Halteelementen (20) getrennt ist, und in der die ersten und zweiten Kopplungselemente (22, 23) zusammenwirken, um die Aktivierung des Trägers (121, 122) durch das entfernbare Betätigungselement (16) für seinen Einbau und Ausbau bezüglich des Gehäuses (13) zu erlauben.

2. Signalisierungs- und/oder Beleuchtungsvorrichtung (10) nach Anspruch 1, **dadurch gekennzeichnet, dass** das entfernbare Betätigungselement (16) im Inneren des Gehäuses (13) angeordnet ist, wenn es mittels der Halteelemente (20) befestigt ist.

3. Signalisierungs- und/oder Beleuchtungsvorrichtung (10) nach einem der Ansprüche 1 oder 2, **dadurch gekennzeichnet, dass** das entfernbare Betätigungselement (16) eine Greifzone enthält, die dazu bestimmt ist, von außerhalb des Gehäuses (13) zugänglich zu sein, wenn die zweite Konfiguration verwendet wird.

4. Signalisierungs- und/oder Beleuchtungsvorrichtung (10) nach einem der vorhergehenden Ansprüche, **dadurch gekennzeichnet, dass** die ersten und zweiten Kopplungselemente (22, 23) so konfiguriert sind, dass sie die Übertragung eines mechanischen Moments vom entfernbaren Betätigungselement (16) zum Träger (121, 122) erlauben, damit die Drehaktivierung des entfernbaren Betätigungselements (16) durch den Benutzer den Träger (121, 122) bezüglich des Gehäuses (13) in Drehung versetzt, um seinen Einbau und seinen Ausbau zu bewirken.

5. Signalisierungs- und/oder Beleuchtungsvorrichtung (10) nach einem der Ansprüche 1 bis 4, **dadurch gekennzeichnet, dass** die Halteelemente (20) Einrastelemente (21) enthalten, die vom Gehäuse (13) und/oder von der Verschlusskappe (17) getragen werden, wobei der Halt des entfernbaren Betätigungselements (16) durch ein Einklinken des entfernbaren Betätigungselements (16) in die Einrastelemente (21) erhalten wird.

6. Signalisierungs- und/oder Beleuchtungsvorrichtung (10) nach einem der Ansprüche 1 bis 5, **dadurch gekennzeichnet, dass** die Halteelemente (20) ein biegsames Verbindungselement (19) enthalten, das es ermöglicht, das entfernbare Betätigungselement (16) dauerhaft mit der Vorrichtung (10), insbesondere der Verschlusskappe (17), zu verbinden, um das entfernbare Betätigungselement (16) unverlierbar und untrennbar vom Gehäuse (13) oder der Verschlusskappe (17) zu machen.

7. Signalisierungs- und/oder Beleuchtungsvorrichtung (10) nach einem der Ansprüche 1 bis 6, **dadurch gekennzeichnet, dass** das entfernbare Betätigungselement (16) mindestens erste und zweite unterschiedliche Köpfe (161, 162) enthält, wobei der erste Kopf (161) so konfiguriert ist, dass er die manuelle Aktivierung eines ersten Trägertyps (121) erlaubt, der für eine erste Glühbirnenart (111) geeignet ist, insbesondere ein Standlicht, um ihn bezüglich des Gehäuse (13) ein- und auszubauen, und der zweite Kopf (162) so konfiguriert ist, dass er die manuelle Aktivierung eines zweiten Trägertyps (122) anders als der erste Trägertyp (121) erlaubt, der für einen zweiten Glühbirnentyp (112) geeignet ist, insbesondere eine Glühbirne eines Richtungsanzeigers, um ihn bezüglich des Gehäuses (13) ein- und auszubauen.

8. Verfahren zur Herstellung einer Signalisierungs- und/oder Beleuchtungsvorrichtung (10) für ein Kraftfahrzeug- nach einem der vorhergehenden Ansprüche, das einen Schritt der Herstellung, insbesondere durch Formen, eines Bauteils aus einem Stück enthält, das die Verschlusskappe (17) und das entfernbare Betätigungselement (16) enthält, die durch eine vorbestimmte Bruchzone verbunden sind, um die Zone trennbar zu machen und die Trennung des entfernbaren Betätigungselements (16) bezüglich der Verschlusskappe (17) zu erlauben, wenn eine vorbestimmte Kraft vom Benutzer auf das entfernbare Betätigungselement (16) ausgeübt wird.

## Claims

1. Signaling and/or lighting device (10) for a motor vehicle, comprising a casing (13) provided with an opening (14) for access toward the interior of the casing (13), a closure cover (17) closing off the access opening (14), a support (121, 122) for receiving a light bulb (111, 112) arranged in the casing (13), and a removable handling element (16) by means of which it is possible to manually actuate the support (121, 122) to install and remove it with respect to the casing (13), the device (10) comprising holding elements (20) for the removable handling element (16) by means of which it is possible to reversibly attach the removable handling element (16) to the casing (13) or to the closure cover (17), **characterized in that** the removable handling element (16) comprises first coupling elements (22) and the support (121, 122) comprises second coupling elements (23) complementary with the first coupling elements (23), the first and second coupling elements (22, 23) being able to mutually engage reversibly such that the signaling and/or lighting device (10) varies selectively between a first configuration in which the removable handling element (16) is attached by means of the holding elements (20) and in which the first and second coupling elements (22, 23) do not mutually engage, and a second configuration in which the removable handling element (16) is not attached to the casing or to the cover and is separated from the holding elements (20) and in which the first and second coupling elements (22, 23) mutually engage so as to allow actuation of the support (121, 122) by the removable handling element (16) for installation and removal of the former with respect to the casing (13).

2. Signaling and/or lighting device (10) according to Claim 1, **characterized in that** the removable handling element (16) is arranged inside the casing (13) when it is attached by means of the holding elements (20).

3. Signaling and/or lighting device (10) according to either one of Claims 1 and 2, **characterized in that** the removable handling element (16) comprises a gripping region designed to be accessible from outside the casing (13) when the second configuration is adopted.

4. Signaling and/or lighting device (10) according to any one of the preceding claims, **characterized in that** the first and second coupling elements (22, 23) are configured such that it is possible to transmit a torque from the removable handling element (16) toward the support (121, 122) in order that the removable handling element (16) being turned by the user turns the support (121, 122) with respect to the casing (13) so as to install and remove it.

5. Signaling and/or lighting device (10) according to any one of Claims 1 to 4, **characterized in that** the holding elements (20) comprise snap-fitting elements (21) borne by the casing (13) and/or by the closure cover (17), the removable handling element (16) being held by snap-fitting the removable handling element (16) in the snap-fitting elements (21).

6. Signaling and/or lighting device (10) according to any one of Claims 1 to 5, **characterized in that** the holding elements (20) comprise a flexible connection element (19) by means of which it is possible to permanently connect the removable handling element (16) to the device (10), in particular to the closure cover (17), such that the removable handling element (16) cannot be lost and cannot be separated from the casing (13) or from the closure cover (17).

7. Signaling and/or lighting device (10) according to any one of Claims 1 to 6, **characterized in that** the removable handling element (16) comprises at least distinct first and second heads (161, 162), the first head (161) being configured such that it is possible to manually actuate a first type of support (121) suitable for a first type of bulb (111), in particular a town light, to install and remove it with respect to the casing (13), and the second head (162) being configured such that it is possible to manually actuate a second type of support (122), different from the first type of support (121), suitable for a second type of bulb (112), in particular a turn indicator bulb, to install and remove it with respect to the casing (13).

8. Method for producing a signaling and/or lighting device (10) for a motor vehicle according to any one of the preceding claims, comprising a step of producing, in particular by casting, a single-piece part comprising the closure cover (17) and the removable handling element (16) connected to one another by a predetermined rupture region in order to make said region breakable and to allow the separation of the removable handling element (16) with respect to the closure cover (17) when a predetermined force is applied by the user to the removable handling element (16) .
